# EUROPEAN PATENT APPLICATION

(11) **EP 2 811 191 A1**
(43) Date of publication of application: **10.12.2014**
(21) Application number: 14171040.0
(22) Date of filing: 03.06.2014
(51) Int. Cl.: F16C 33/64, B23B 31/02, B23Q 16/00, B23B 31/19, B23B 31/20

(54) **Apparatus for machining a flanged bearing ring**

(30) Priority: 04.06.2013 IT TO20130462
(71) Applicant: Aktiebolaget SKF, 41 550 Göteborg (SE)
(72) Inventor: Marchis, Renato, 10136 Torino (TO) (IT); Pisano, Umberto, 10068 Villafranca Piemonte (TO) (IT)
(74) Representative: Tedeschini, Luca

(57) **Abstract**

An apparatus for machining a bearing ring (40) defining a central axis (x) and having a radially outer flange (41) with two opposite surfaces (44, 45) extending transversely to the central axis (x), wherein the two surfaces (44, 45) are located on opposite sides of the flange (41) and are directed in axially opposite directions. The flanged ring has an internal cavity (47a) extending axially and having one or more raceways (42) to be machined. The ring (40) is driven for rotation around the axis (x) to machine the raceway(s) (42) while holding the ring axially clamped at the two opposite surfaces (45, 46) of the flange (41).

## Description

### Technical field of the invention

The present invention relates to an apparatus for machining a flanged bearing ring.

### Background art

In order to machine the raceways of a bearing outer ring, particularly for turning the raceways, the ring to machine is locked radially by radial jaws of a chuck of a numerically controlled machine. The ring forms an axially extending internal cavity providing one or two raceways to be turned. According to the prior art, the radial jaws of the chuck are engaged against a radially outer cylindrical surface of the ring to be machined. The jaws act in radially inner directions, directed toward a central axis of rotation defined by the ring. The bearing ring is rotated around the central axis of rotation due to the radial clamping exerted by the jaws. A cutting tool is moved in numerically controlled manner surface of the raceway(s).

In some instances, the raceways of the bearings manufactured according to the above mentioned technique have roundness defects, and other unacceptable distortions.

### Summary of the Invention

A primary object of the present invention is to obviate the aforementioned drawback, machining bearing rings with perfectly circular raceways.
The above and other objects and advantages, which will be better clarified hereinafter, are achieved, according an aspect of the invention, by an apparatus as defined in claim 1. Preferred embodiments of the invention are defined in the dependent claims. In summary, an apparatus is proposed for machining a bearing ring that defines a central axis of rotation and has a radially outer flange with two opposite surfaces extending transversely to the central axis. The two opposite surfaces are located on opposite sides of the flange and are directed in axially opposite directions. The ring has an axially extending internal cavity one or more raceways to be machined. The ring is driven in rotation about the axis of rotation to machine the raceway or raceways while retaining the ring axially clamped at the two opposite surfaces of the flange.

### Brief Description of the Drawings

A preferred embodiment of an apparatus according to the present invention will now be described, reference being made to the accompanying drawings, in which:
- Figs. 1 and 2 are axial cross-sectional views of an apparatus according to the present invention, depicting schematically two subsequent steps of a process for machining a bearing ring;
- Fig. 3 is an axial cross-sectional view of a flanged bearing ring mounted in an apparatus having a preliminary centering ring;
- Fig. 4 is a plan view schematically showing the centering of a flanged ring; and
- Fig. 5 is a perspective view of a component of the apparatus.

### Detailed Description

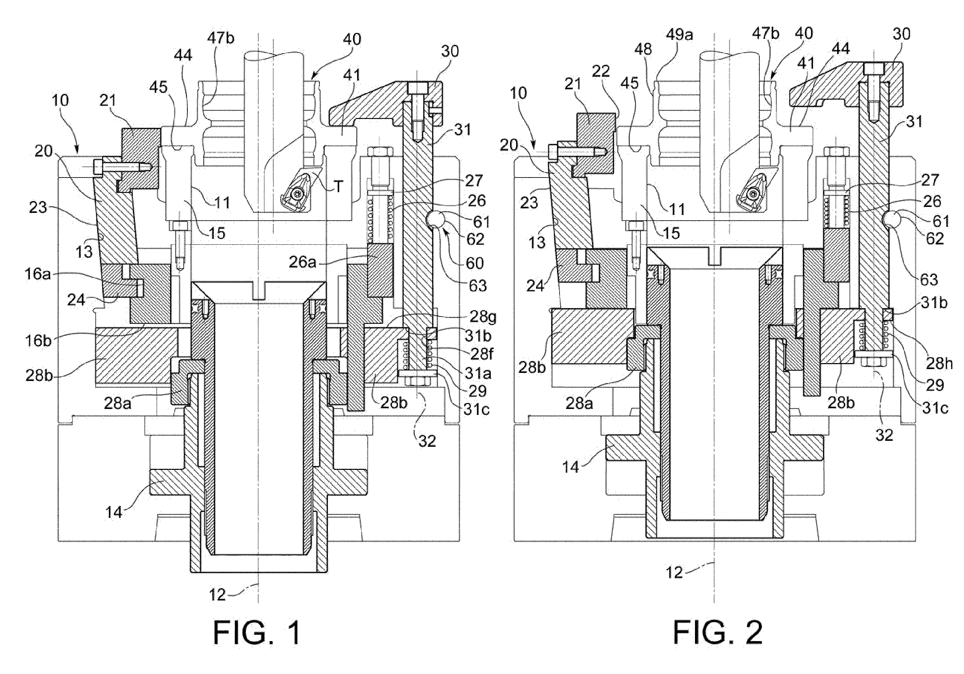

Referring initially to FIG. 1, numeral 10 designates a rotatable part of a machining apparatus, typically a numerically controlled lathe. The rotatable part 10 and parts of the equipment associated with it for the implementation of this process are described herein only in connection with their features that are needed for understanding the invention.

The rotatable part 10 provides a vertically extending cavity 11, having the shape of a surface of revolution around a vertical axis 12. Formed in the rotatable part 10 are a plurality of surfaces 13 inclined downwards and towards the vertical axis 12, and spaced around the vertical axis 12. Figures 1 and 2 show only one of the inclined surfaces 13. The inclined surfaces 13 may for example be made in the shape of cylindrical holes inclined downwards and towards the central axis 12. Alternatively, the inclined surfaces 13 may include flat surfaces inclined as mentioned, or surfaces in the form of segments of a conical surface tapering downwards and towards the vertical axis 12.

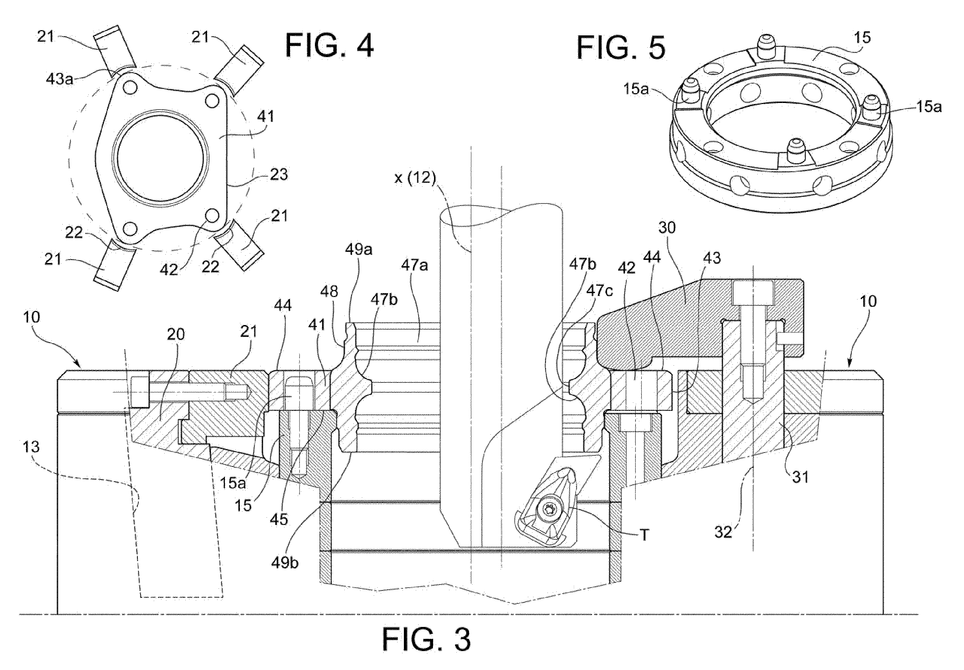

A linear driving element 14 is vertically slidable inside the cavity 11, in this example a piston of tubular shape, preferably hydraulically controlled. An axial positioner 15 is mounted in the rotatable part 10, at a radially inner location with respect to the inclined surfaces 13. In this example, the axial positioner 15 is of annular shape and has an axially fixed position along the vertical axis 12. The positioner 15 serves as an axial abutment element for a lower axial bearing ring 40 to be machined. The ring 40 is a flanged ring, suitable to constitute the radially outer ring of a bearing unit. The ring 40 forms a radially outer flange 41, with a plurality of circular through holes 42. The flange 41 has a radially outer peripheral surface 43 and two radial surfaces 44, 45 located on opposite sides of the flange and directed in axially opposite directions (fig. 3).

A corresponding plurality of sliding blocks 20 is slidingly engaged against the inclined surfaces 13. Each sliding block has at least one inclined surface 23 of a shape matching that of the respective inclined surface 13 presented by the rotatable part 10 of the apparatus. The sliding blocks 20, only one of which is illustrated in Figures 1 and 2, are angularly distributed around the vertical axis 12.

Each sliding block is secured to or integral with a respective centering jaw 21 which provides an engagement surface 22 facing the vertical axis 12. In a preferred embodiment, the engagement surfaces 22 of the centering jaws are concave, with the concavity directed toward the vertical axis 12, for engaging respective portions of the peripheral surface 43 of the flange in a radial thrust relationship.

In the illustrated embodiment, each sliding block 20 is secured to or integral with engagement means 24, in this example provided by elements 24 or teeth projecting radially inwardly, which allow to constrain each axially sliding block 20 to a slider ring 16. The slider ring 16 is accommodated in a vertically movable manner within the rotatable part 10 of the apparatus. The teeth 24 are engaged in recesses 16a obtained in the slider ring 16.

A set of elastic elements 26, in this example vertical springs, only one of which is shown in the drawings, is interposed axially between the slider ring 16 and an upper annular abutment surface 27, which is vertically fixed and rigidly coupled to the rotatable part 10. The springs 26 urge the slider ring 16 downwards and therefore, through the teeth 24, also the sleeve 20. Designated at 26a is an annular spacer, which is optional, interposed between the springs 26 and the slider ring 16.

The slider ring 16 and the sleeve 20 can be raised due to lifting movements imparted to the piston 14, through a series of intermediate transmission elements 28a to 28e, interposed between the piston 14 and the slider ring 16. Transmission elements 28a - 28e are rigid elements, bound axially to the tubular piston 14 and are able to act in a vertical thrust relationship against a lower surface 16b of the slider ring 16, to push it upwards.

In the particular embodiment illustrated (Fig. 1), owing to the axial coupling between the sliding blocks 20, the teeth 24 and the slider ring 16, the lifting of the piston 14 also causes the lifting of the sliding blocks 20 and the centering jaws 21. Due to the engagement of the teeth 24 in the recesses or 16a, the lowering the slider ring 16 also causes the lowering of the sliding blocks 20 and the centering jaws 21.

Owing to the sliding coupling of the inclined facing surfaces 13 and 23, provided by the rotatable part 10 of the apparatus and the sliding blocks 20, respectively, the lowering or lifting movements of the slider ring 16 cause an expansion or contraction, respectively, in the radial direction, of the space between the engagement surfaces 22 of the centering jaws 21.

According to an embodiment, the apparatus is provided with a plurality of locking levers 30, in this example three in number, which serve for the axial clamping and locking of a bearing ring 40 to be machined. The locking levers 30 are arranged on an upper portion of the rotatable part 10, spaced around the vertical axis 12.

In a preferred embodiment, each locking lever 30 is secured to a respective rod 31 which extends along an axis 32 preferably parallel to the vertical rotation axis 12. In the particular embodiment shown in figures 1 and 2, each rod 31 has the ability to slide vertically along its axis 32 and rotate around it to move the lever from a disengaged, radially outermost position (fig. 1), to a second, more central or radially innermost position of engagement (fig. 2). In the second position (fig. 2) the locking lever 30 axially locks a bearing ring 40 to be machined.

According to a preferred embodiment, the lifting and lowering movements of the locking levers 30 and the rods 31, as well as rotation movements of the rods around their respective vertical axes 32, are performed as a result of the lifting and lowering movements of the tubular piston 14.

The intermediate transmission elements 28a-28e, which are bound axially to the tubular piston 14, comprise an upper element 28b that is connected to the lower parts of the rods 31. The upper element 28b provides, for each rod 31, a respective through hole 28f that is crossed by a lower portion 31a of the rod 31. The upper element 28b has an upper horizontal surface 28g which abuts under and against a horizontal surface 31b of the rod 31.

According to an embodiment, a resilient element 39, in this example in the form of a helical spring, is interposed axially between an end retaining element 31c on the rod 31 and a lower horizontal surface 28h of the upper transmission element 28b.

Due to the abutment between the horizontal surfaces 28g and 31b, the lifting of the piston 14 and the transmission element 28b also causes the lifting of the rod 31 and the locking lever 30. The lowering of the piston 14 drags down the rods 31. The springs 39, which at this stage are elastically compressed between the retaining element 31c and the lower surface 28h, absorb an excess part of the force with which the piston 14 is lowered hydraulically. Therefore, only a fraction of the strength of lowering of the piston 14 is transmitted to the levers 30, as explained herein after.

In the particular embodiment illustrated, each rod 31 is rotatable around its vertical axis, due to a cam mechanism 60 that comprises a ball 61 partially received in a hemispherical seat 62 formed in the rotatable part 10 of the apparatus, and partially in a helical groove 63 formed in the rod 31. Owing to the cam mechanism 60, the lifting and lowering movements imparted to the rod 31 will also cause it to rotate around its vertical axis 32.

The bearing ring to be machined is designated at 40. The ring 40 defines a central axis of rotation x and has an axially extending internal cavity 47a, in which there is formed at least one raceway 47b to be machined. In this example, two raceways 47b, 47b are aligned in the axial direction and separated by a central shoulder 47c. In addition, the bearing ring 40 has a radially outer cylindrical surface 48 and two opposite end surfaces 49a, 49b, extending transversely with respect to the axis of rotation x and located at two respective opposite axial ends of the ring 40.

The shape of the surfaces of the raceways, as well as their number, should not to be considered as limiting. In the illustrated example, the raceways 42 are rounded or toroidal for the balls of a bearing. In other embodiments, not illustrated, the raceways may be cylindrical or frustoconical, for example, for the rolling elements of tapered roller bearings.

In order to ensure a more accurate radial centering, as shown schematically in Figure 4, the radial jaws 21 are preferably arranged in number and in such positions as to radially urge the outer peripheral surface 43 of the flange 41 in the areas of lobes 43a formed around the holes 42.

In a preliminary or initial processing step, shown in Fig. 1, the tubular piston 14 is in a vertically raised position. The transmission elements 28a-b, the slider ring 16, the sliding blocks 20 and the centering jaws 21 are also raised. The sliding blocks 20 are in a raised position along the inclined surfaces 13. The centering jaws 21 are radially spaced to the extent that the radially outer peripheral surface 43 of the flange 41 of the ring 40 to be machined can be fitted between the engagement surfaces 22 of the centering jaws. The locking levers 30 are in vertically raised positions rotated in a position farther from the axis 12, in such a way as to allow the insertion of the ring 40 between the jaws 21.

The axial positioner 15 of the example illustrated in Figures 3 and 5 may provide a number of axially projecting pins 15a adapted to be inserted with play into the holes 42 of the flange, in order to orient the ring 40 angularly with respect to the centering jaws. The orientation pins 15a are optional, as an automatic loading of the rings 40 to be machined can place the rings 40 in a precise manner on the rotatable part 10 of the machining apparatus.

The lower radial surface 45 of the flange ring 41 rests on the axial positioner 15. In the arrangement illustrated in Fig. 1, the centering jaws 21 are in positions which are raised and radially spaced from each other, so there is some radial play between the radially outer peripheral surface 43 of the flange 41 and the engagement surfaces 22 of the centering jaws 21.

Subsequently (Fig. 2), the tubular piston 14 is lowered, pulling down the intermediate transmission elements 28a-28b. The springs 26 are free to extend downwards, pushing down the slider 16. The latter pulls down the sliding blocks 20 with it.
The lowering of the sliding blocks 21 of the centering sleeve, by virtue of the sliding of their outer surfaces 23 against the inclined surfaces 13, causes the radial approach of the jaws 21 towards the vertical axis 12. The engagement surfaces 22 of the jaws urge against the peripheral surface 43 of the flange along different radial lines of action, angularly spaced from one another, and extending in radially inner directions toward the vertical axis 12. In this manner the jaws cause the radial centering of the ring 40 with respect to the vertical axis 12 of the cavity 11. More in particular, in the centered condition, the central axis x of the bearing coincides with the vertical axis 12 around which the rotatable part of the apparatus 10 is then caused to rotate.

Owing to the cam mechanism 60, the lowering of the tubular piston 14 and the transmission elements 28a-28b connected thereto, lowers and rotates each rod 31 about its axis 32 (fig. 2), bringing the respective lever 30 in a lower position nearer to the vertical axis of rotation 12. In this condition, the flange 41 of the ring 40 is axially clamped between the locking levers 30 and the axial positioner 15. The ring 40 is so firmly locked to the rotatable part 10 of the apparatus.

The centering jaws 21 exert negligible stresses in radially inner directions against the ring 40. The radial force exerted by the jaws 21 is advantageously determined by the springs 26, and not directly by the hydraulic thrust of the piston 14. Therefore, the action exerted by the centering jaws 21 is sufficient to cause the centering of the ring 40 relative to the vertical axis of rotation 12 of the apparatus, and hold the ring in a centered position and hold it back until the ring is not locked and clamped axially by the locking levers 30. The radial force exerted by the jaws 21 is insufficient to deform the ring 40 radially. The jaws 21 only exert a centering action, but no radial clamping in order to retain the ring and drive it for rotation around the axis 12. Therefore, owing to the axial clamping of the ring, it is not deformed during the subsequent machining step. Thus, the machining step produces raceways having neither roundness defects nor other unacceptable deformations.

Advantageously, also the axial clamping force, exerted by the levers 30, is controlled through the springs 39. The springs 39, being resiliently compressed, have the effect that not all of the vertical stress imparted to the tubular piston 14 is integrally transmitted to the ring being machined.

The ring 40 is then driven for rotation, by controlling rotational movement of the rotatable part 10 around the vertical axis 12. As will be appreciated, the absence of radial stresses prevents deformation during the subsequent turning step, in which a cutting tool T is controlled in such a way as to follow a predetermined path in the internal cavity 47a of the ring, turning the raceway(s) 47b.

Owing to the present invention, in addition to achieving better quality and machining accuracy of the raceways, and improvement of the turning parameters can also be accomplished. The number of components (the jaws) required for retaining the ring being machined may be reduced. In fact, the locking levers 30 may serve for the locking of the bearing rings having different axial lengths and diameters. The yield of the apparatus is also increased, thanks to a shortening of the resetting time, as well as the time required for loading and unloading workpieces on the machine.

## Claims

1. Apparatus for machining a bearing ring (40), the apparatus comprising a part (10) rotatable about a vertical axis of rotation (12), **characterised by** comprising:
a cavity (11) extending vertically, provided by the rotatable part (10);
axial abutment means (15) arranged in the rotatable part (10) and having a fixed axial position along the vertical axis of rotation (12);
a plurality of surfaces (13) inclined downwards and towards the vertical axis of rotation (12), the surfaces (13) being provided by the rotatable part (10) and spaced around the vertical axis of rotation;
a corresponding plurality of sliding blocks (20), each having at least one surface (23) slidingly coupled with a respective one of the plurality of inclined surfaces (13);
a corresponding plurality of centering jaws (21), each integral with a respective sliding block (20), each centering jaw (21) having an engagement surface (22) facing the vertical axis of rotation (12), the centering jaws being capable of reaching
a radially outermost position, in which the sliding blocks (20) reach a raised position and the centering jaws (21) are radially spaced apart, so as to a flanged bearing ring (40) between the jaws with the bearing ring abutting against the lower axial abutment means (15), and
a radially innermost position, in which the sliding blocks (20) reach a lowered position and the centering jaws (21) are radially closer, thereby centering the flanged bearing ring (40) with respect to the vertical axis of rotation (12);
a plurality of locking elements (30) located on top of the part (10) rotatable about the vertical axis of rotation (12), the locking elements (30) being mounted on rods (31) vertically sliding along and rotatable about vertical axes (32), whereby the locking elements are capable of reaching:
- a first, disengaged position, in which the locking elements (30) are rotated farther from the vertical axis of rotation (12), and
- a second, engaged position, in which the locking elements (30) are rotated nearer to the vertical axis of rotation (12) and are lowered along said axes (32).

2. Apparatus according to claim 1, **characterised by** comprising a linear driving element (14) vertically movable in the cavity (11) along the vertical axis of rotation (12) and operatively connected to the sliding blocks (20) to cause the lifting and lowering of the sliding blocks along the inclined surfaces (13) between the raised position and the lowered position.

3. Apparatus according to claim 2, **characterised by** comprising
an slider ring (16), axially bounded to the sliding blocks (20), and intermediate transmission means (28a, 28b) interposed between the linear driving element (14) and the slider ring (16);
wherein the intermediate transmission means are axially secured to the linear driving element (14) and are capable of exerting a vertical upward thrust against a lower surface (16b) of the slider ring (16).

4. Apparatus according to claim 1, **characterised by** comprising first resilient means (26) adapted for urging the sliding blocks (20) toward their lowered position.

5. Apparatus according to claims 3 and 4, **characterised in that** the first resilient means (26) are axially interposed between the slider ring (16) and an upper abutment surface (27) vertically fixed on the rotatable part (10), so as to urge the slider ring (16) and the sliding blocks (20) downward.

6. Apparatus according to claim 1, **characterised by** comprising second resilient means (39) which urge the vertically sliding rods (31) toward a lowered position along the axes (32).

7. Apparatus according to claims 3 and 6, **characterised in that** the second resilient means (39) are interposed between the retaining elements (31c) integral with the vertically sliding rods (31) and a lower horizontal surface (28h) of one (28b) of the intermediate transmission means (28a, 28b), and that said intermediate transmission means (28b) provides an upper horizontal surface (28g) which abuts under and against horizontal surfaces (31b) of the vertically sliding rods (31).
